# EUROPEAN PATENT APPLICATION

(11) **EP 4 068 465 A1**
(43) Date of publication of application: **05.10.2022**
(21) Application number: 20907968.0
(22) Date of filing: 15.12.2020
(51) Int. Cl.: H01M 10/44, H02J 7/00

(54) **CHARGING METHOD AND APPARATUS, DEVICE AND STORAGE MEDIUM**

(30) Priority: 27.12.2019 CN 201911382299
(71) Applicant: GUANGDONG OPPO MOBILE TELECOMMUNICATIONS CORP., LTD., Dongguan, Guangdong 523860 (CN)
(72) Inventor: CHEN, Wei, Dongguan, Guangdong 523860 (CN)
(74) Representative: Penza, Giancarlo
(86) International application number: PCT/CN2020/136460
(87) International publication number: WO 2021/129461

(57) **Abstract**

A charging method and apparatus, a device, and a storage medium. The method comprises: when charging a battery for a terminal according to a specific charging mode, determining a usage state of the terminal (101); according to the usage state, determining a corresponding charge cut-off point, wherein different usage states correspond to different charge cut-off points, and different charge cut-off points correspond to different cut-off electric quantities (102); and ending charging when the battery is charged to the charge cut-off point (103).

## Description

### CROSS REFERENCE OF RELATED APPLICATION

This application is filed based on a Chinese patent application No. 201911382299.0 with a filing date of December 27, 2019 and claims priority to the Chinese patent application, and the entire content of the Chinese patent application is incorporated herein by reference in its entirety.

### TECHNICAL FIELD

Embodiments of the present disclosure relates to electronic technologies, including but not limited to a charging method, a charging apparatus, a device and a storage medium.

### BACKGROUND

With the development of electronic technologies, more and more applications are integrated on terminals to meet needs of users' daily life and work, which makes users more and more dependent on the terminals. Meanwhile, due to lightweight and slim requirements of the terminals, battery designs for the terminals are becoming more lightweight and slimmer. However, capacity of a battery is limited, which makes the users have to charge the terminals frequently.

Therefore, how to charge the battery to meet the user's needs for charging durations in different usage scenes is very important for the user's charging experience.

### SUMMARY

Accordingly, embodiments of the present disclosure provide a charging method, a charging apparatus, a device and a storage medium, which aim to meet the user's needs for charging durations and charging electric quantities in different usage scenes more flexibly, so as to better improve the user's charging experience. Technical solutions of the embodiments of the present disclosure may be realized as follows.

In a first aspect, an embodiment of the present disclosure provides a charging method. The method may include: determining, in response to charging a battery of a terminal according to a specific charging mode, a usage state of the terminal; determining, based on the usage state, a corresponding charging cut-off point, different usage states being corresponding to different charging cut-off points, and the different charging cut-off points being corresponding to different cut-off electric quantities; and ending, in response to the charging reaches the corresponding charging cut-off point, the charging.

In a second aspect, an embodiment of the present disclosure provides a charging apparatus. The apparatus may include: a determination module and a control module. The determination module is configured to determine, in response to charging a battery of a terminal according to a specific charging mode, a usage state of the terminal. The determination module is further configured to determine, based on the usage state, a corresponding charging cut-off point, different usage states are corresponding to different charging cut-off points, and the different charging cut-off points are corresponding to different cut-off electric quantities. The control module is configured to end, in response to the charging reaches the corresponding charging cut-off point, the charging.

In a third aspect, an embodiment of the present disclosure provides an electronic device. The electronic device may include: a memory and a processor. The memory is stored with a computer program runnable on the processor, and the processor is configured to, when executing the program, implement the operations of any one charging method of the present disclosure.

In a fourth aspect, an embodiment of the present disclosure provides a computer readable storage medium stored with a computer program, and the computer program is executable by a processor to cause the processor to implement the operations of any one charging method of the present disclosure.

In the embodiments of the disclosure, the usage state of the terminal is determined when charging the battery of the terminal according to the specific charging mode, then the corresponding charging cut-off point is determined according to the usage state, and afterwards the charging ends when the charging reaches the corresponding charging cut-off point. Therefore, according to different usage states of the terminal, the cut-off point for ending the charging is targetedly selected, so that the user's requirements for charging durations and charging electric quantities in different usage scenes can be more flexibly met, and the charging experience of the user can be better improved.

### BRIEF DESCRIPTION OF THE DRAWINGS

FIG. 1 illustrates a schematic implementation flowchart of a charging method according to an embodiment of the present disclosure.
FIG. 2 illustrates a schematic view of charging stages included in a charging mode according to an embodiment of the present disclosure.
FIG. 3 illustrates a schematic implementation flowchart of a charging method according to another embodiment of the present disclosure.
FIG. 4 illustrates a schematic implementation flowchart of a charging method according to still another embodiment of the present disclosure.
FIG. 5 illustrates a schematic implementation flowchart of a charging method according to even still another embodiment of the present disclosure.
FIG. 6A illustrates a schematic implementation flowchart of a charging method according to further still another embodiment of the present disclosure.
FIG. 6B illustrates a schematic implementation flowchart for prompting a user that the charging has been completed according to an embodiment of the present disclosure.
FIG. 7A illustrates a schematic structural view of a charging apparatus according to an embodiment of the present disclosure.
FIG. 7B illustrates a schematic structural view of another charging apparatus according to an embodiment of the present disclosure.
FIG. 8 illustrates a schematic hardware entity of an electronic device according to an embodiment of the present disclosure.
FIG. 9 illustrates a schematic structural view of a chip according to an embodiment of the present disclosure.

### DETAILED DESCRIPTION OF EMBODIMENTS

In order to make objectives, technical solutions and advantages of embodiments of the present disclosure clearer, concrete technical solutions of the present disclosure will be described in further detail below with reference to drawings in the embodiments of the present disclosure. The following embodiments are illustrative of the present disclosure and are not intended to limit the scope of the present disclosure.

Unless stated otherwise, all technical and scientific terms used herein have the same meanings as commonly understood by those skilled in the art to which the present disclosure belongs. The terms used herein are for the purpose of describing embodiments of the present disclosure only and are not intended to limit the present disclosure.

In the following description, reference is made to "some embodiments", which describes a subset of all possible embodiments, but it is understood that "some embodiments" may be the same subset or different subsets of all possible embodiments and may be combined with each other without conflict.

It should be noted that the terms "first/second/third" as used in the embodiments of the present disclosure are intended to distinguish similar objects and do not represent a specific ordering of the objects. It is understood that the terms "first/second/third" may be interchanged in a specific order or precedence under permitted conditions, so that the embodiments of the present disclosure described herein can be implemented in an order other than those illustrated or described herein.

Charging methods provided in embodiments of the present disclosure can be applied to electronic devices, and the electronic devices can be various types of devices with secondary batteries in implementation processes. For example, the electronic devices may include intelligent mobile terminals (such as mobile phones), mobile power supplies (such as power banks and travel chargers), laptops, unmanned aerial vehicles (UAVs), tablet computers, e-books, e-cigarettes smart electronic devices (such as watches, bracelets, smart glasses, floor sweeping robots), small electronic products (such as wireless headphones, BLUETOOTH^{®} speaker, electric toothbrushes, rechargeable wireless mice), etc. Of course, the electronic device may be a power adapter. Functions realized by the method can be realized by calling program codes by a processor in the electronic device, and of course, the program codes can be stored in a computer storage medium. It can be seen that the electronic device at least includes a processor and a storage medium.

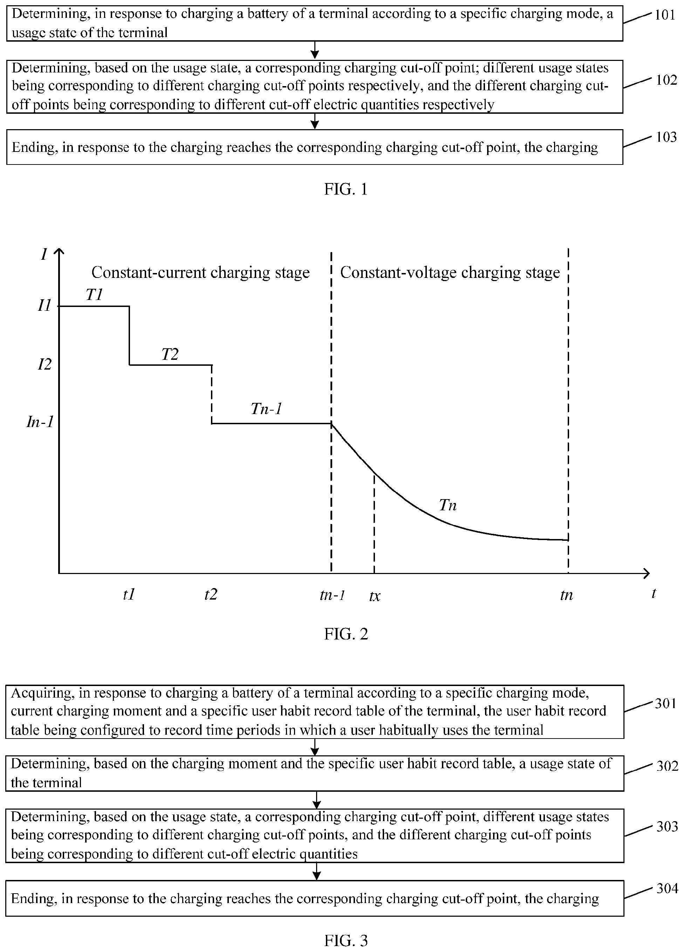

FIG. 1 illustrates a schematic implementation flowchart of a charging method according to an embodiment of the present disclosure. As illustrated in FIG. 1, the method at least may begin from block 101 to block 103.

At the block 101, determining, in response to charging a battery of a terminal according to a specific charging mode, a usage state of the terminal.

It is noted that, the electronic device and the terminal may be the same device or different devices. When they are different devices, for example, the electronic device is a power adapter and the terminal is a smart phone. When they are the same device, for example, the electronic device and the terminal are the same mobile phone.

In an embodiment of the present disclosure, the charging mode is that: first, constant-current charging the battery; and when a charging voltage of constant-current charging reaches a safety cut-off voltage, constant-voltage charging the battery according to the safety cut-off voltage until an electric quantity of the battery reaches an electric quantity threshold (e.g., the electric quantity threshold is full electric quantity), and then stop charging. As illustrated in FIG. 2, the charging mode includes a constant-current charging stage and a constant-voltage charging stage. The number of sub-stage(s) contained in the constant-current charging is not limited, the constant-current charging includes at least one constant-current charging sub-stage, and different constant-current charging sub-stages correspond to different charging currents respectively.

At the block 102, determining, based on the usage state, a corresponding charging cut-off point. Different usage states being corresponding to different charging cut-off points respectively, and different charging cut-off points being corresponding to different cut-off electric quantities respectively.

It can be understood that, under different usage states, a user has different requirements for charging durations. For example, when the user is resting at night, the terminal is not used, so that a length of the charging duration will not affect the user's charging experience. At this situation, the charging can be ended after the battery is charged to full electric quantity; for example, as illustrated in FIG. 2, the charging cut-off point is set at the end of the constant-voltage charging, that is, the charging is ended at a charging point *tn.* However, when the user is in a hurry to use the terminal, the length of the charging duration will affect the user's charging experience. At this situation, the charging can be ended before the battery is charged to full electric quantity, so as to shorten the charging duration; for example, as illustrated in FIG. 2, the charging cut-off point is set at the end of constant-current charging, that is, the charging is ended at a charging point *tn* -1*.*

At the block 103, ending, in response to the charging reaches the corresponding charging cut-off point, the charging.

In the illustrated embodiment of the present disclosure, when charging a battery of a terminal according to a specific charging mode, the usage state of the terminal is determined, and then the corresponding charging cut-off point is determined according to the usage state, and when charging reaches the corresponding charging cut-off point, the charging ends. Therefore, according to different usage states of the terminal, the cut-off point for ending the charging is targetedly selected, so that the user's requirements for charging durations and charging electric quantities in different usage scenes can be more flexibly met, and the charging experience of the user can be better improved.

Another embodiment of the present disclosure provides a charging method. FIG. 3 illustrates a schematic implementation flowchart of the charging method according to the another embodiment of the present disclosure. As illustrated in FIG. 3, the method at least may begin from block 301 to block 304.

At the block 301, acquiring, in response to charging a battery of a terminal according to a specific charging mode, current charging moment and a specific user habit record table of the terminal, the user habit record table being configured to record time periods in which a user habitually uses the terminal.

In some embodiments, the electronic device may learn the user habit according to a user log, and thereby determine the time periods in which the user frequently uses the terminal, and record these time periods in the user habit record table. For example, as shown in Table 1, the time periods of the user habitually using the terminal are: 8:00 to 9:30, 11:30 to 13:00, 17:30 to 19:00, and 20:00 to 22:00.

**Table 1**

| No. | Time period of a user habitually using a terminal |
|---|---|
| 1 | 8:00 to 9:30 |
| 2 | 11:30 to 13:00 |
| 3 | 17:30 to 19:00 |
| 4 | 20:00 to 22:00 |

It should be noted that, the user habit record table would change with time, that is, the electronic device updates the user habit record table according to the latest user log, so as to obtain data conforming to a current usage habit of the user.

At the block 302, determining, based on the charging moment and the specific user habit record table, a usage state of the terminal.

It can be understood that, when the charging moment falls into the time periods recorded in the user habit record table, it is determined that the usage state is being used, and at this case, the charging cut-off point can be determined as the end of constant-current charging, that is, the charging ends when the constant-current charging stage is completed. On the other hand, when the charging moment does not fall into the time periods recorded in the user habit record table, it is determined that the usage state is not being used, and at this case, the charging cut-off point can be determined as the end of constant-voltage charging, that is, the charging ends when all charging phases of the charging mode are completed.

At the block 303, determining, based on the usage state, a corresponding charging cut-off point, different usage states being corresponding to different charging cut-off points, and different charging cut-off points being corresponding to different cut-off electric quantities.

At the block 304, ending, in response to the charging reaches the corresponding charging cut-off point, the charging.

In the illustrated embodiment of the present disclosure, the usage state of the terminal is determined according to the habit of the user using the terminal and the current charging moment, which can quickly and accurately determine the usage state of the terminal and thereby quickly determine the corresponding charging cut-off point.

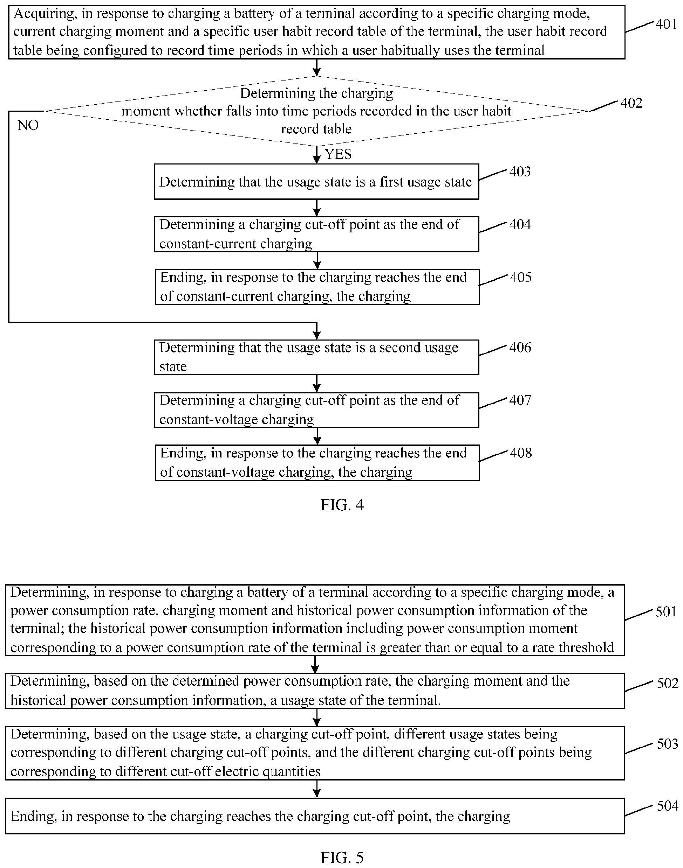

Still another embodiment of the present disclosure provides a charging method. FIG. 4 illustrates a schematic implementation flowchart of the charging method according to the still another embodiment of the present disclosure. As illustrated in FIG. 4, the method at least may begin from block 401 to block 408.

At the block 401, acquiring, in response to charging a battery of a terminal according to a specific charging mode, current charging moment and a specific user habit record table of the terminal, the user habit record table being configured to record time periods in which a user habitually uses the terminal.

The charging mode may be that: first, constant-current charging the battery; and then constant-voltage charging the battery.

At the block 402, determining the charging moment whether falls into time periods recorded in the user habit record table, if YES, executing the block 403, otherwise, executing the block 406.

At the block 403, determining that the usage state is a first usage state, and then going to the block 404.

It can be understood that, the first usage state herein may represent that the user is using the terminal.

At the block 404, determining a charging cut-off point as the end of constant-current charging, and then going to the block 405.

At the block 405, ending, in response to the charging reaches the end of constant-current charging, the charging.

At the block 406, determining that the usage state is a second usage state, and then going to the block 407.

At the block 407, determining a charging cut-off point as the end of constant-voltage charging, and then going to the block 408.

It should be noted that, in some embodiments, when the usage state is the second usage state, the electronic device may determine the charging cut-off point to be any one point before the end of constant-voltage charging, that is, the electronic device ends the charging when the charging reaches the any one point before the end of the constant-voltage charging.

It should be noted that, the first usage state and the second usage state are two different states, the former usually represents the user is using or about to use the terminal, while the latter represents the user is not using the terminal.

At the block 408, ending, in response to the charging reaches the end of constant-voltage charging, the charging.

Even still another embodiment of the present disclosure provides a charging method. FIG. 5 illustrates a schematic implementation flowchart of the charging method according to the even still another embodiment of the present disclosure. As illustrated FIG. 5, the method at least may begin from block 501 to block 504.

At the block 501, determining, in response to charging a battery of a terminal according to a specific charging mode, a power consumption rate, charging moment and historical power consumption information of the terminal; the historical power consumption information including power consumption moment corresponding to a power consumption rate of the terminal is greater than or equal to a rate threshold.

The charging mode may be that: first, constant-current charging the battery; and then constant-voltage charging the battery.

It can be understood that, the power consumption rate is directly related to whether there are applications running in the foreground of the terminal and types of foreground applications. If there is no application running in the foreground, the power consumption rate is slow. If there is an application running in the foreground, the power consumption rate is relatively fast, and a video type application consume power at a faster rate than a reading type application. A video call application consumes power at a faster rate than a voice call application.

In some embodiments, the electronic device can determine the power consumption rate based on a consumed electric quantity per unit of time of the terminal.

At the block 502, determining, based on the determined power consumption rate, the charging moment and the historical power consumption information, a usage state of the terminal.

For example, the electronic device may determine the usage state of the terminal according to block 602 to block 607 of an embodiment described later.

At the block 503, determining, based on the usage state, a charging cut-off point, different usage states being corresponding to different charging cut-off points, and the different charging cut-off points being corresponding to different cut-off electric quantities.

At the block 504, ending, in response to the charging reaches the charging cut-off point, the charging.

In the illustrated embodiment, the usage state of the terminal is determined according to the power consumption rate, the charging moment and the historical power consumption information of the terminal, so that corresponding charging cut-off points under different usage states can be more flexibly selected, thereby adapting to requirements of a user on charging durations of the terminal under different use scenes, and improving the charging experience of the user under different use scenes consequently.

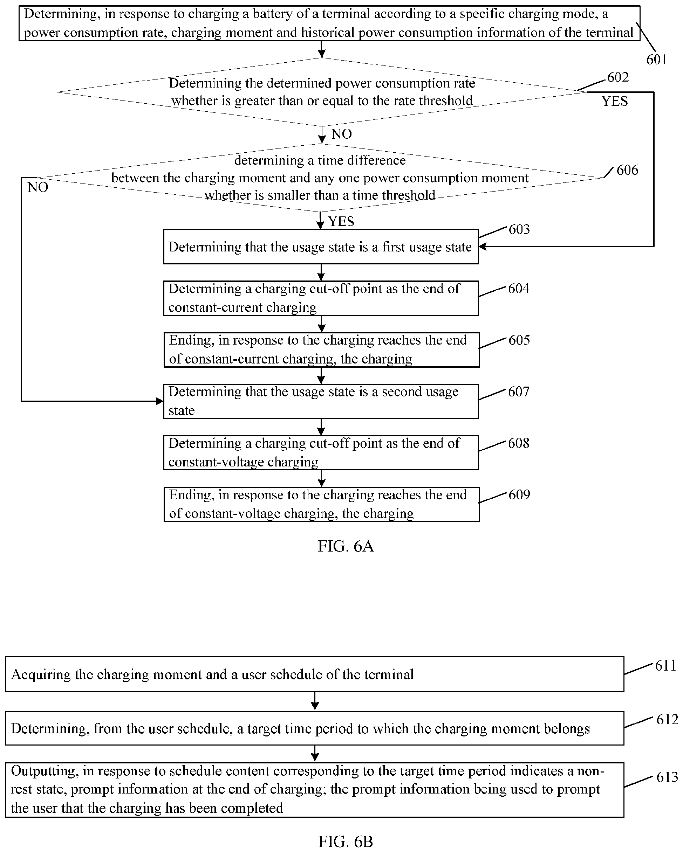

Further still another embodiment of the present disclosure provides a charging method. FIG. 6A illustrates a schematic implementation flowchart of the charging method according to the further still another embodiment. As illustrated in FIG. 6A, the method at least may begin from block 601 to block 609.

At the block 601, determining, in response to charging a battery of a terminal according to a specific charging mode, a power consumption rate, charging moment and historical power consumption information of the terminal; the historical power consumption information including power consumption moment when a power consumption rate of the terminal is greater than or equal to a rate threshold.

The charging mode may be that: first, constant-current charging the battery; and then constant-voltage charging the battery.

In some embodiments, the electronic device can learn the user habit according to user log, and thereby determine time periods in which the user often uses the terminal, and then select any moment in each of the time periods as the power consumption moment. For example, the time period when the user often plays games is 20:00 to 22:00, and the time 20:00 can be used as the power consumption moment. For another example, the user starts to play his/her mobile phone and watch videos after work, the off-duty time periods are 12:00 to 12:30, and 18:00 to 19:00; and the two times 12:00 and 18:00 can be used as the power consumption moment. For still another example, the user uses his/her mobile phones to watch videos, chat or work on the way to work, the time spent on the way is concentrated from 7:00 to 8:00, and the time 7:00 or 7:30 can be used as the power consumption moment.

It should be noted that, the historical power consumption information may include one power consumption moment, or include multiple (i.e., more than one) power consumption moments; and the power consumption moment is used to record historical moment when the user often uses the terminal.

At the block 602, determining the determined power consumption rate whether is greater than or equal to the rate threshold, if YES, executing the block 603, otherwise, executing the block 606.

It can be understood that, if the power consumption rate is greater than or equal to the rate threshold, which indicates the user is using the terminal. For example, the user is using his/her mobile phone to watch live broadcast of a ball game, or to play a game, or to make a video call, etc.; all of the above usage scenes require a fast charging for the user, and thus the charging can be ended when the charging reaches the end of constant-current charging, thereby shortening the charging duration.

At the block 603, determining that the usage state is a first usage state, and then going to the block 604.

At the block 604, determining a charging cut-off point as the end of constant-current charging, and then going to the block 605.

At the block 605, ending, in response to the charging reaches the end of constant-current charging, the charging.

The aging or performance degradation of the battery is irreversible, and a characteristic of constant-voltage charging is that the charging current is small (especially when the charging is about to end, the charging current is smaller), resulting in long charging duration, and the electric quantity charged by constant-voltage charging accounts for a very small proportion of the total capacity of the battery (for example, 2%). Therefore, in an application scene where the power consumption rate is greater than or equal to the rate threshold, the battery may not be charged to full electric quantity, and a part of the constant-voltage charging process is omitted, so that the charging is quickly completed on the premise of meeting the user's demand for battery power, and the user's charging experience is improved consequently.

At the block 606, determining a time difference between the charging moment and any one power consumption moment whether is smaller than a time threshold, if YES, executing the block 603, otherwise, executing the block 607.

It can be understood that, if the time difference is smaller than or equal to the time threshold, which means the charging moment is close to the power consumption moment, for example, it is approaching the user's time to play games, the user's working time or the user's off-duty time, and it is presumed that the user may be in a hurry to use the terminal. Therefore, even if the power consumption rate is smaller than the rate threshold, the terminal has to be charged quickly, i.e., the charging ends when the charging reaches the end of constant-current charging. Since the battery power obtained from constant-current charging is sufficient to meet the user's demand for electric quantity in the above application scene, the constant-voltage charging process can be omitted, thereby shortening the charging duration and improving the user's charging experience.

If the time difference between the charging moment and the power consumption moment is greater than the time threshold, which means it is still early for the user to use the terminal, so that more electric quantity can be charged to the terminal, to improve endurance experience of the user when using the terminal. That is, the charging ends when the charging reaches the end of constant-voltage charging, or when the charging reaches any point before the end of constant-voltage charging.

At the block 607, determining that the usage state is a second usage state, and then going to the block 608.

At the block 608, determining a charging cut-off point as the end of constant-voltage charging, and then going to the block 609.

In some embodiments, the electronic device when determines that the usage state is the second usage state, can determine the charging cut-off point as any point before the end of constant-voltage charging instead, that is, the electronic device ends the charging when the charging reaches the any point before the end of constant-voltage charging.

At the block 609, ending, in response to the charging reaches the end of constant-voltage charging, the charging.

In the illustrated embodiment of the present disclosure, when the power consumption rate is greater than or equal to the rate threshold, the battery is charged by constant-current charging and the constant-voltage charging process is omitted, so as to shorten the charging duration when the user urgently needs to use the terminal and thereby improve the user's charging experience. When the power consumption rate is less than the rate threshold, an appropriate charging cut-off point is selected according to the relationship between the charging moment and the power consumption moment in the historical power consumption information. For example, when the charging moment is close to the power consumption moment, the constant-current charging process is selected to charge the battery, so as to meet the user's demand for electric quantity when the user habitually uses the terminal. When the charging moment is far from the power consumption moment, more electric quantity can be charged for the battery, so that the user can continuously use the terminal for a longer time, thereby improving the user's endurance experience.

In some embodiments, as illustrated in FIG. 6B, the method may further carry out block 611 to block 613.

At the block 611, acquiring the charging moment and a user schedule of the terminal.

At the block 612, determining, from the user schedule, a target time period to which the charging moment belongs.

In some embodiments, the electronic device can automatically establish the user schedule according to application running time information recorded in the user log. The schedule is used to record time periods of the user in rest states and non-rest states. For example, as shown in Table 2, the user usually is in rest state at 13:00-14:00, 23:00-7:00, and it is necessary to avoid disturbing the user's rest during these time periods.

**Table 2**

| Time period | User state |
|---|---|
| 7:00-13:00 | non-rest state |
| 13:00-14:00 | rest state |
| 14:00-23:00 | non-rest state |
| 23:00-7:00 | rest state |

At the block 613, outputting, in response to schedule content corresponding to the target time period indicates a non-rest state, prompt information at the end of charging; the prompt information being used to prompt the user that the charging has been completed.

It can be understood that, when the user is in the non-rest state, the prompt information is output, so as to prompt the user that the charging has been finished. In general, when the user is in the non-rest state, he/she is highly dependent on the terminal. For example, in the non-rest state, users may urgently need to use the terminal to participate in a video conference. Therefore, in order to make the user to use the terminal with sufficient electric quantity in time, a prompt information is output at the end of charging to inform the user that the charging has been completed.

The output of the prompt information can be in a variety of ways, and the electronic device can output the prompt information in at least one of the following ways: voice, vibration and notification message.

In some embodiments, when the schedule content corresponding to the target time period indicates the user is in the rest state, no prompt information is output even when the charging is finished. In this way, it can avoid outputting the prompt information to bring disturbance to the user and affect the user's rest.

Since the aging or performance degradation of the battery is irreversible, the induced problem of long charging duration of "constant-voltage charging" can only be solved by finding other non-technical solution. A characteristic of the constant-voltage charging is that the charging current is small (especially at the end of charging), which leads to a long charging duration, but the charged electric quantity accounts for a small proportion of the overall capacity of the battery in this process.

Therefore, in an embodiment of the present disclosure, as illustrated in FIG. 2, all or part of the constant-voltage charging process can be set as an independent charging section, that is, a charging cut-off point tx is selected between tn-1 and tn, and the interval tx ~ tn is set as an independent charging section, and the charging process of the charging section is executed only in some specific charging scenes.

For example, in a scene requiring fast charging, charging to tx is the end of charging. When the mobile phone meets a specific charging scene (such as nighttime), charging to tx will not stop, and will continue to charging the battery in the interval of tx ~ tn by constant-voltage charging. The effect is that the battery can be charged with more electric quantity.

The selection of the charging cut-off point tx can be determined in consideration of charging duration, or determined based on a magnitude of the charging current.

During implementation, two different charging circuits may be provided (for example, a direct charging path or a charging path provided with a charge pump, a charging circuit used for high-current fast charging or high-voltage fast charging), and the charging circuit of fast charging is used in the former stage (the interval before tx). In the interval of tx ~ tn, an ordinary charging circuit (the charging circuit used in the traditional 5V/1A, 5V/2A), such as a Buck circuit or a circuit with a charging chip, is used.

The above charging section can be placed in a special charging scene that the user "doesn't care" about, such as the nighttime charging scene. Or, combined with an artificial intelligence algorithm, such scene can be set automatically according to individual user's usage habit, and when the user is in such scene, the charging section is enabled, thereby completing the overall charging process. When the user is in a normal use scene, the charging process can be completed quickly, to improve the charging experience of the user.

In the illustrated embodiment of the present disclosure, different charging processes can bring the user satisfactory charging experience in different usage scenes, and have less impact on the user's endurance experience. This is because the "constant-voltage charging" process has low charging current and low charged electric quantity, but the charging duration is longer.

Based on the above-mentioned embodiments, an embodiment of the present disclosure provides a charging apparatus. Various modules included in the apparatus can be implemented by one or more processors in the electronic device; and of course, they can be implemented by specific logic circuits instead. In the process of implementation, the processor can be a central processing unit (CPU), a microprocessor (MPU), a digital signal processor (DSP), or a field-programmable gate array (FPGA), etc.

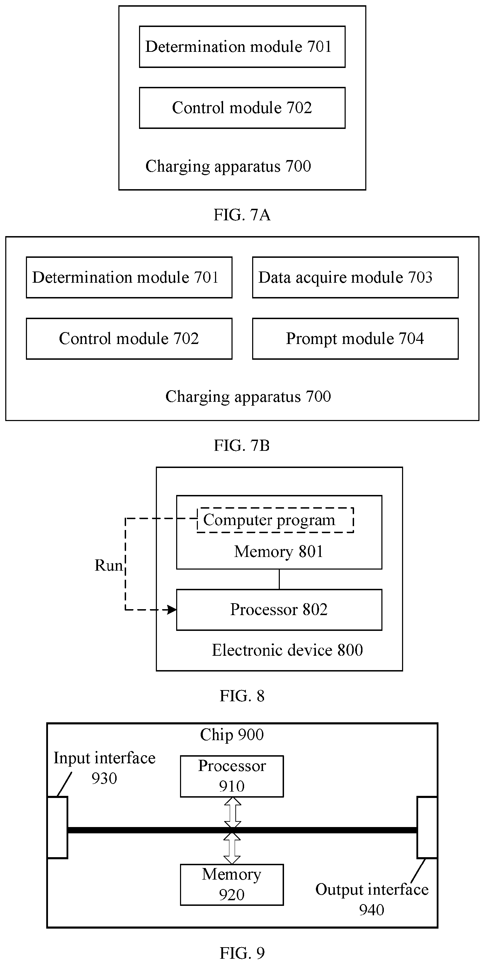

FIG. 7A illustrates a schematic structure of the charging apparatus according to the embodiment of the present disclosure. As illustrated in FIG. 7A, the apparatus 700 may include a determination module 701 and a control module 702.

The determination module 701 is configured to determine, in response to charging a battery of a terminal according to a specific charging mode, a usage state of the terminal.

The determination module 701 is further configured to determine, based on the usage state, a corresponding charging cut-off point. Different usage states correspond to different charging cut-off points, and the different cut-off points correspond to different cut-off electric quantities.

The control module 702 is configured to end, in response to the charging reaches the charging cut-off point, the charging.

In some embodiments, the determination module 701 is configured to: acquire current charging moment and a specific user habit record table of the terminal, the user habit record table being configured to record time periods in which a user habitually uses the terminal; and determine the usage state of the terminal according to the charging moment and the specific user habit record table.

In some embodiments, the determination module 701 is configured to: determine that the usage state is a first usage state, in response to the charging moment falls into the time periods recorded in the user habit record table; and determine that the usage state is a second usage state in response to the charging moment does not fall into the time periods recorded in the user habit record table.

In some embodiments, the determination module 701 is configured to: determine a power consumption rate, charging moment and historical power consumption information of the terminal, the historical power consumption information including power consumption moment when a power consumption rate of the terminal is greater than or equal to a rate threshold; and determine the usage state of the terminal according to the power consumption rate, the charging moment and the historical power consumption information of the terminal.

In some embodiments, the determination module 701 is configured to: determine that the usage state is a first usage state when the determined power consumption rate is greater than or equal to the rate threshold; determine that the usage state is the first usage state when the determined power consumption rate is less than the rate threshold and a time difference between the charging moment and any one the power consumption moment is less than a time threshold; and determine that the usage state is a second usage state when the determined power consumption rate is less than the rate threshold and the time difference between the charging moment and any one the power consumption moment is greater than or equal to the time threshold.

In some embodiments, the charging mode is that: first constant-current charging the battery, and then constant-voltage charging the battery; and the determination module 701 is configured to: determine the charging cut-off point as the end of the constant-current charging when the usage state is the first usage state; and determine the charging cut-off point as the end of the constant-voltage charging or any point before the end of the constant-voltage charging when the usage state is the second usage state.

In some embodiments, as illustrated in FIG. 7B, the apparatus 700 may further include data acquire module 703 and a prompt module 704. The data acquire module 703 is configured to acquire a charging moment of the terminal and a user schedule. The determination module 701 is further configured to determine a target time period to which the charging moment belongs from the user schedule. The prompt module 704 is configured to output prompt information, in response to schedule content corresponding to the target time period indicates a non-rest state, at the end of the charging; and the prompt information being configured to prompt the user that the charging has been completed.

In some embodiments, the data acquire module 703 is further configured to establish the user schedule according to application running time information recorded in user log.

In some embodiments, there is no prompt information is output at the end of the charging when schedule content corresponding to the target time period indicates a rest state.

The description of the above apparatus embodiments is similar to the description of the above method embodiments, and has similar beneficial effects to the method embodiments. For technical details not disclosed in the apparatus embodiments of the present disclosure, please refer to the description of the method embodiments of the present disclosure for understanding.

It should be noted that, in the embodiments of the present disclosure, the above charging method, when it is implemented in the form of software function modules and sold or used as an independent product, they may be stored in a computer-readable storage medium. Based on this understanding, the technical solution of the embodiment of the present disclosure essentially or the part that contributes to the related art can be embodied in the form of a software product. The computer software product is stored in a storage medium and includes several instructions to enable an electronic device (may be an intelligent mobile terminal, a mobile power supply, an electric vehicle, a laptop, a UAV, a tablet, an e-book, an e-cigarette, an intelligent electronic device, a small electronic product, etc.) to implement all or part of the method described in each of various embodiments of the present disclosure. The aforementioned storage medium includes a medium capable of storing program codes, such as a mobile storage device, a ROM, a magnetic disc or an optical disc. Therefore, the embodiments of the present disclosure are not limited to any specific combination of hardware and software.

Correspondingly, an embodiment of the present disclosure provides an electronic device. FIG. 8 illustrates a schematic hardware entity of the electronic device according to the embodiment of the present disclosure. As illustrated in FIG. 8, the hardware entity of the electronic device 800 may include a memory 801 and a processor 802. The memory 801 is stored with a computer program executable on the processor 802. The processor 802 is configured to implement the blocks of the charging method of any one of the above embodiments when executing the program.

The memory 801 may be specifically configured to store instructions and applications that can be executed by the processor 802, and further cache data (e.g., image data, audio data, voice communication data and video communication data) to be processed or already processed by processor 802 and various modules in the electronic device 800. The memory 801 may be embodied either through a flash memory (FLASH) or a random-access memory (RAM).

Correspondingly, an embodiment of the present disclosure provides a computer readable storage medium having a computer program stored thereon. the computer program is configured to, when executed by a processor, implement the blocks of the charging method of any one of the above embodiments.

FIG. 9 illustrates a schematic structure of a chip according to an embodiment of the present disclosure. As illustrated in FIG. 9, the chip 900 may include a processor 910, and the processor 910 can call a computer program from a memory and run the computer program, to implement the method of any one of embodiments of the present disclosure.

In an embodiment, as illustrated in FIG. 9, the chip 900 may further include a memory 920. The processor 910 may call a computer program from the memory 920 and run the computer program, to implement the method of any one of embodiments of the present disclosure.

The memory 920 may be a separate device independent of the processor 910, or may be integrated into the processor 910.

In an embodiment, the chip 900 may further include an input interface 930. The processor 910 can control the input interface 930 to communicate with other device or chip, and specifically can acquire information or data sent from the other device or chip.

In an embodiment, the chip 900 may further include an output interface 940. The processor 910 can control the output interface 940 to communicate with other device or chip, and specifically can output information or data to the other device or chip.

In an embodiment, the chip can be applied into the electronic device according to the embodiment of the present disclosure, and the chip can realize a corresponding process implemented by the electronic device in each of the methods of respective embodiments of the present disclosure. For the sake of concise, it will not be repeated herein.

It should be understood that, the chip in the illustrated embodiment of the present disclosure may also be referred to as a system-level chip, a system chip, a chip system, or a systemon-chip (SoC).

It should be noted herein that, the description of the above embodiments of the storage medium, the chip and the device is similar to the description of the above embodiments of the method, and has similar beneficial effects to the embodiments of the method. For technical details not disclosed in the embodiments of the storage medium and the device of the present disclosure, please refer to the description of the embodiments of the method of the present disclosure for understanding.

It should be understood that "one embodiment" or "an embodiment" used in throughout the specification means that specific features, structures or characteristics associated with the embodiment is included in at least one embodiment of the present disclosure. Therefore, "in one embodiment" or "in an embodiment" appearing throughout the specification does not necessarily mean the same embodiment. In addition, these specific features, structures or characteristics may be combined in any suitable manner in one or more embodiments. It should be understood that, in the various embodiments of the present disclosure, the size of the serial numbers of in each of the above processes does not imply the order of execution, and the order of execution of each of the processes should be determined by its function and inherent logic, and should not constitute any limitation on the implementation processes of the embodiments of the present disclosure. The above serial numbers of the embodiments of the present disclosure are only for description, and do not represent one of the embodiments is better than another of the embodiments.

It is noted that, in the present disclosure, the terms "include", "contain" or any other variation thereof are intended to cover non-exclusive inclusion, such that a process, a method, an article, or an apparatus including a set of elements not only includes these elements, but also includes other elements not expressly listed, or includes elements inherent to such process, method, article, or apparatus. Without further limitation, an element defined by the statement "including one ... " does not preclude the presence of another identical element in the process, method, article, or apparatus including the element.

In the several embodiments provided in the present disclosure, it should be understood that the disclosed device and methods can be implemented in other ways. The apparatus embodiments described above are merely illustrative, for example, the division of modules is only a logical function division, and there can be other division method in an actual implementation, such as multiple modules or components can be combined, or can be integrated into another system, or some features can be ignored, or not implemented. In addition, the coupling, direct coupling or communication connection between the components shown or discussed can be through some interfaces; indirect coupling or communication connection of devices or modules can be electrical, mechanical or other forms.

The modules described above as separate components may be or may not be physically separated, and the components illustrated as modules may be or may not be physical modules, either are located in one place or are distributed to multiple network units; Some or all of the modules can be selected according to practical needs to achieve the purposes of solutions of the embodiments.

In addition, the functional modules in the various embodiments of the present disclosure can be all integrated in one processing unit, or each module can be used as a unit individually, or two or more of the modules can be integrated in one unit. The above integrated modules can be implemented either in the form of hardware or in the form of hardware plus software functional units.

Those skilled in the art may understand that all or some of the blocks of realizing the above method embodiments can be embodied by programs instructing related hardware, the above programs can be stored in computer-readable storage media, and the program, when executed, implements the blocks included in the above method embodiment. The aforementioned storage media include various media capable of storing program codes, such as mobile storage devices, read only memory (ROM), magnetic discs, or optical discs.

Alternatively, the above integrated unit of the present disclosure, when implemented in the form of software function modules and sold or used as an independent product, may be stored in a computer-readable storage medium. Based on this understanding, the technical solution of the embodiment of the present disclosure essentially or the part that contributes to the related art can be embodied in the form of a software product. The computer software product is stored in a storage medium and includes several instructions to enable an electronic device (may be an intelligent mobile terminal, a mobile power supply, an electric vehicle, a laptop, a UAV, a tablet, an e-book, an e-cigarette, an intelligent electronic device, a small electronic product, etc.) to implement all or part of the method described in various embodiments of the present disclosure. The aforementioned storage medium includes a medium capable of storing program codes, such as a mobile storage device, a ROM, a magnetic disc or an optical disc.

The methods disclosed in the several method embodiments provided by the present disclosure can be combined arbitrarily on the prerequisite of without conflict, to obtain new method embodiments.

The features disclosed in the several product embodiments provided by the present disclosure can be combined arbitrarily on the prerequisite of without conflict, to obtain new product embodiments.

The features disclosed in the several method or apparatus embodiments provided by the present disclosure can be combined arbitrarily on the prerequisite of without conflict, to obtain new method embodiments or apparatus embodiments.

The above description is only the embodiments of the present disclosure, but the scope of protection of the present disclosure is not limited to this. Those skilled in the art can easily think of changes or substitutions within the technical scope disclosed in the present disclosure, which should be covered by the scope of protection of the present disclosure. Therefore, the protection scope of the present disclosure shall be subject to the protection scope of the appended set of claims.

## Claims

1. A charging method, comprising:
determining, in response to charging a battery of a terminal according to a specific charging mode, a usage state of the terminal;
determining, based on the usage state, a corresponding charging cut-off point; wherein different usage states correspond to different charging cut-off points, and the different charging cut-off points correspond to different cut-off electric quantities; and
ending, in response to the charging reaches the corresponding charging cut-off point, the charging.

2. The method according to claim 1, wherein the determining a usage state of the terminal comprises:
acquiring current charging moment and a specific user habit record table of the terminal, wherein the user habit record table is configured to record a time period of a user habitually using the terminal; and
determining, based on the charging moment and the specific user habit record table, the usage state of the terminal.

3. The method according to claim 2, wherein the determining, based on the charging moment and the specific user habit record table, the usage state of the terminal, comprises:
determining that the usage state is a first usage state when the charging moment falls into the time period recorded in the user habit record table;
determining that the usage state is a second usage state when the charging moment does not fall into the time period recorded in the user habit record table.

4. The method according to claim 1, wherein the determining a usage state of the terminal comprises:
determining a power consumption rate, charging moment and historical power consumption information of the terminal, wherein the historical power consumption information comprises a power consumption moment when a power consumption rate of the terminal is greater than or equal to a rate threshold; and
determining, based on determined power consumption rate, the charging moment and the historical power consumption information of the terminal, the usage state of the terminal.

5. The method according to claim 4, wherein the determining, based on determined power consumption rate, the charging moment and the historical power consumption information of the terminal, the usage state of the terminal, comprises:
determining that the usage state is a first usage state, when the determined power consumption rate is greater than or equal to the rate threshold;
determining that the usage state is the first usage state, when the determined power consumption rate is less than the rate threshold and a time difference between the charging moment and any one the power consumption moment is less than a time threshold;
determining that the usage state is a second usage state, when the determined power consumption rate is less than the rate threshold and the time difference between the charging moment and any one the power consumption moment is greater than or equal to the time threshold.

6. The method according to claim 3 or 5, wherein the charging mode is that: first constant-current charging the battery, and then constant-voltage charging the battery; and
wherein the determining, based on the usage state, a corresponding charging cut-off point, comprises:
determining the charging cut-off point as an end of the constant-current charging, when the usage state is the first usage state;
determining the charging cut-off point as an end of the constant-voltage charging or any one point before the end of the constant-voltage charging, when the usage state is the second usage state.

7. The method according to claim 6, wherein the constant-current charging at least comprises one constant-current charging sub-stage, and different constant-current charging sub-stages correspond to different charging currents.

8. The method according to any one of claims 1-7, wherein the method further comprises:
acquiring charging moment and a user schedule of the terminal;
determining, from the user schedule, a target time period to which the charging moment belongs; and
outputting, in response to schedule content corresponding to the target time period indicates a non-rest state, prompt information at the end of the charging, wherein the prompt information is configured to prompt a user that the charging has been completed.

9. The method according to claim 8, wherein the method further comprises:
establishing, based on application running time information record in user log, the user schedule.

10. The method according to claim 8, wherein there is no prompt information is output, in response to the schedule content corresponding to the target time period indicates a rest state.

11. A charging apparatus, comprising: a determination module and a control module;
wherein the determination module is configured to determine, in response to charging a battery of a terminal according to a specific charging mode, a usage state of the terminal;
wherein the determination module is further configured to determine, based on the usage state, a corresponding charging cut-off point, different usage states are corresponding to different charging cut-off points, and the different charging cut-off points are corresponding to different cut-off electric quantities;
wherein the control module is configured to end, in response to the charging reaches the corresponding charging cut-off point, the charging.

12. The apparatus according to claim 11, wherein the determination module is configured to:
acquire current charging moment and a specific user habit record table of the terminal, the user habit record table being configured to record a time period in which a user habitually uses the terminal; and
determine, based on the charging moment and the specific user habit record table, the usage state of the terminal.

13. The apparatus according to claim 12, wherein the determination module is configured to:
determine that the usage state is a first usage state, when the charging moment falls into the time period recorded in the user habit record table;
determine that the usage state is a second usage state, when the charging moment does not fall into the time period recorded in the user habit record table.

14. The apparatus according to claim 11, wherein the determination module is configured to:
determine a power consumption rate, charging moment and historical power consumption information of the terminal, the historical power consumption information comprising a power consumption moment when a power consumption rate of the terminal is greater than or equal to a rate threshold; and
determine, based on determined power consumption rate, the charging moment and the historical power consumption information of the terminal, the usage state of the terminal.

15. The apparatus according to claim 14, wherein the determination module is configured to:
determine that the usage state is a first usage state, when the determined power consumption rate is greater than or equal to the rate threshold;
determine that the usage state is the first usage state, when the determined power consumption rate is less than the rate threshold and a time difference between the charging moment and any one the power consumption moment is less than a time threshold;
determine that the usage state is a second usage state, when the determined power consumption rate is less than the rate threshold and the time difference between the charging moment and any one the power consumption moment is greater than or equal to the time threshold.

16. The apparatus according to claim 13 or 15, wherein the charging mode is that: first constant-current charging the battery, and then constant-voltage charging the battery; and
wherein the determination module is configured to:
determine the charging cut-off point as an end of the constant-current charging, when the usage state is the first usage state;
determine the charging cut-off point as an end of the constant-voltage charging or any one point before the end of the constant-voltage charging, when the usage state is the second usage state.

17. The apparatus according to claim 15, wherein the constant-current charging comprises at least one constant-current charging sub-stage, and different constant-current charging sub-stages correspond to different charging currents.

18. The apparatus according to any one of claims 11-17, wherein the apparatus further comprises: a data acquire module and a prompt module;
wherein the data acquire module is configured to acquire charging moment and user schedule of the terminal;
wherein the determination module is further configured to determine, from the user schedule, a target time period to which the charging moment belongs; and
wherein the prompt module is configured to output, in response to schedule content corresponding to the target time period indicates a non-rest state, prompt information at an end of the charging, the prompt information being configured to prompt a user that that the charging has been completed.

19. An electronic device, comprising a memory and a processor; wherein the memory is stored with a computer program runnable on the processor, and the processor is configured to, when executing the program, implement the operations of the charging method according to any one of claims 1-10.

20. A non-transitory computer readable storage medium stored with a computer program, and the computer program is executable by a processor to cause the processor to implement the operations of the charging method according to any one of claims 1-10.
